(19) Europäisches Patentamt

European Patent Office

Office européen des brevets

(11) **EP 4 299 893 A1**

(12) **EUROPEAN PATENT APPLICATION**

published in accordance with Art. 153(4) EPC

(43) Date of publication:
**03.01.2024 Bulletin 2024/01**

(21) Application number: **22759607.9**

(22) Date of filing: **22.02.2022**

(51) International Patent Classification (IPC):
*F02M 25/08* (2006.01)   *B01D 53/04* (2006.01)
*B01J 20/20* (2006.01)   *B01J 20/28* (2006.01)
*C01B 32/30* (2017.01)

(52) Cooperative Patent Classification (CPC):
**B01D 53/04; B01J 20/20; B01J 20/28; C01B 32/30; F02M 25/08**

(86) International application number:
**PCT/JP2022/007085**

(87) International publication number:
**WO 2022/181571 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.02.2021 JP 2021027988**

(71) Applicant: **Nippon Paper Industries Co., Ltd. Tokyo 114-0002 (JP)**

(72) Inventors:
• **IMAI, Daisuke**
  **Tokyo 114-0002 (JP)**
• **WATANABE, Yoshihide**
  **Tokyo 114-0002 (JP)**
• **TAKATA, Yu**
  **Tokyo 114-0002 (JP)**
• **RYU, Dongyeon**
  **Tokyo 114-0002 (JP)**

(74) Representative: **Hoffmann Eitle**
**Patent- und Rechtsanwälte PartmbB**
**Arabellastraße 30**
**81925 München (DE)**

(54) **MOLDED ADSORBENT FOR CANISTERS**

(57)   An object is to provide an adsorbing material using activated carbon fiber, suitable for motor vehicle canisters, and enabling reduction in pressure loss. Another object is to provide a formed adsorber using activated carbon fiber, with improved mechanical strength, and having excellent effects of an adsorbing material for canisters.

The formed adsorber for canisters satisfies the following conditions (1) to (3).

(1) The formed adsorber includes: an adsorbing material including activated carbon fiber; and a binder.

(2) A ratio of a content of the binder to a content of the adsorbing material including the activated carbon fiber is 0.3 to 20 parts by weight of the binder to 100 parts by weight of the adsorbing material including the activated carbon fiber.

(3) The activated carbon fiber has a fiber size of 13.0 $\mu$m or larger.

**Fig. 1**

EP 4 299 893 A1

## Description

### Technical Field

The present invention relates to a formed adsorber suitable for canisters, and more particularly, to a formed adsorber for canisters, the formed adsorber using activated carbon fiber.

### Background Art

Gasoline-powered vehicles release fuel vapor that has filled their fuel tanks due to change of pressure in the fuel tanks with changes, such as changes in outside air temperature. The released fuel vapor is considered to be one of substances contributing to PM2.5 or photochemical smog. Canisters including adsorbing materials, such as activated carbon, have been provided to prevent the release of the fuel vapor into the atmosphere. (Hereinafter, in this Description, a canister mounted in a motor vehicle may simply be referred to as a "motor vehicle canister" or more simply a "canister.")

With the recent increase in awareness for environmental conservation, gas emission regulations tend to be tightened year by year and there is thus a demand for canisters to have higher adsorption performance. Furthermore, intake performance of motor vehicles tends to be reduced due to the spread of start-stop systems, for example, and gasoline adsorbed by adsorbing materials in their canisters thus tends to be difficult to be desorbed. Therefore, there is a demand for adsorbing materials used in canisters to have even higher performance. Activated carbon is used as an adsorbing material to be used in canisters and has been proposed to be in granular form, pellet form, or honeycomb form (for example, Patent Literature 1).

Activated carbon fiber (or fibrous activated carbon) is sometimes referred to as the third activated carbon in contrast with conventional powdered or granular activated carbon. Among activated carbon in a broad sense, activated carbon fiber is said to: have micropores that are directly open at the outer surface of the activated carbon fiber; and have a tendency to be high in adsorption and desorption speed. However, activated carbon fiber has not been put to practical use in canisters, and research and development have not advanced sufficiently as to characteristics of activated carbon fiber suitable for practical use in canisters.

An activated carbon fiber sheet having given characteristics has been proposed as one of adsorbing materials suitable for canisters (Patent Literature 2).

Furthermore, a formed activated carbon fiber adsorber has been proposed for improvement of mechanical strength and filling density of formed adsorbers using activated carbon fiber, the formed activated carbon fiber adsorber including: activated carbon fiber and fibrillated cellulose fiber having resistance to alkali (for example,

Patent Literature 3).

### Citation List

#### Patent Literature

Patent Literature 1: Japanese Patent Application Laid-open No. 2013-173137
Patent Literature 2: Japanese Patent No. 6568328
Patent Literature 3: Japanese Patent Application Laid-open No. H10-005580

### Summary of Invention

#### Technical Problem

As described above, using activated carbon fiber as an adsorbing material for canisters has been attempted but activated carbon fiber has still been under development for an adsorbing material for canisters. Aiming to enable activated carbon fiber to be used practically as an adsorber in motor vehicle canisters, the present inventors conducted diligent research and found that: the adsorbing material needs to be immobilized so that the adsorbing material is not worn away by, for example, vibration caused when the motor vehicles are driven; and a sheet formed of activated carbon fiber is a practically preferred embodiment in terms of ease of use, for example. However, the present inventors faced a problem that fully filling a chamber for storing an adsorbing material with an activated carbon fiber sheet obtained by carbonization and activation as conventionally done increases the pressure loss in the canister.

In view of the foregoing, one of objects to be solved by the present invention is to provide an adsorbing material using activated carbon fiber, suitable for canisters, and enabling reduction of pressure loss.

Furthermore, another one of the objects to be solved by the present invention is to provide a formed adsorber that is a formed product using activated carbon fiber and still being difficult to be deformed and that serves as an adsorbing material having excellent effects for canisters.

**Solution to Problem**

As a result of conducting diligent study, the present inventors found that an adsorbing material enabling improvement of gas permeability and reduction of pressure loss and suitable for canisters is able to be obtained by manufacturing an activated carbon fiber material using fiber having fiber size larger than those of conventional ones. Furthermore, the present inventors found that a formed product obtained by mixing the activated carbon fiber material and a binder is able to serve as a formed adsorber enabling reduction of pressure loss and having improved mechanical strength and thus being difficult to be deformed, and the present inventors completed the present invention on the basis of these findings. The present invention can be understood in various aspects and includes the following, for example, as solutions to problems.

[1] A formed adsorber for canisters, the formed adsorber comprising: an adsorbing material including activated carbon fiber; and a binder,

a ratio of a content of the binder to a content of the adsorbing material including the activated carbon fiber being 0.3 to 20 parts by weight of the binder to 100 parts by weight of the adsorbing material including the activated carbon fiber,
the activated carbon fiber having a fiber size of 13.0 $\mu$m or larger.

[2] The formed adsorber according to [1] above, wherein fineness of a fiber material serving as a precursor of the activated carbon fiber ranges from 4.0 to 60.0 dtex.
[3] The formed adsorber according to [1] or [2] above, wherein the activated carbon fiber has a specific surface area ranging from 1110 to 2300 $m^2$/g.
[4] The formed adsorber according to any one of [1] to [3] above, wherein the activated carbon fiber has a total pore volume ranging from 0.50 to 1.20 $cm^3$/g.
[5] The formed adsorber according to any one of [1] to [4] above, wherein the activated carbon fiber has a pore volume ranging from 0.20 to 1.20 $cm^3$/g, the pore volume being a volume of pores having pore sizes larger than 0.7 nm and equal to or smaller than 2.0 nm.
[6] The formed adsorber according to any one of [1] to [5] above, wherein the activated carbon fiber has a pore volume ratio $R_{0.7/2.0}$ of 15% or more and less than 50%, and the pore volume ratio $R_{0.7/2.0}$ is a ratio of a pore volume of pores having pore sizes of 0.7 nm or smaller to a pore volume of pores having pore sizes of 2.0 nm or smaller.
[7] A canister comprising the formed adsorber according to any one of [1] to [6] above.
[8] The canister according to [7] above, wherein the canister is a canister for a motor vehicle.

**Advantageous Effects of Invention**

According to an aspect of the present invention, an adsorbing material is able to be provided, the adsorbing material using activated carbon fiber, being suitable for canisters, and reducing pressure loss.
According to another aspect of the present invention, a formed adsorber is able to be provided, the formed adsorber being a formed product that uses activated carbon fiber and yet is difficult to be deformed, the formed adsorber having excellent effects of an adsorbing material for canisters.

**Brief Description of Drawings**

FIG. 1 is a diagram schematically illustrating an example of a layered adsorber having plural sheet-formed adsorbers layered over one another and an example of a flow direction of fluid that passes through the layered adsorber.
FIG. 2 is a diagram illustrating an example of an adsorber that has been formed in a disk shape.
FIG. 3 is a diagram illustrating an example of an adsorber that has been formed in a cylinder shape.

**Description of Embodiments**

Embodiments of the present invention will be described hereinafter. The phrase, "ranging from AA to BB," related a numerical range means "being in the range of AA or more and BB or less" (where "AA" and "BB" represent any numerical values), unless otherwise specified. Furthermore, the units of the lower limit and the upper limit are the same as the unit written immediately after the upper limit (that is, "BB" herein), unless otherwise specified.

1. Formed adsorber for Canisters

A formed adsorber of the present invention is able to be used suitably in canisters. A canister is a piece of equipment that includes an adsorbing material and has a role in reducing vaporized fuel vapor released into the atmosphere by letting the vaporized fuel vapor be adsorbed by the adsorbing material and supplying fuel vapor to an engine by letting the fuel vapor adsorbed by the adsorbing material be desorbed when the engine is operating. Canisters are generally used in machines or equipment including internal-combustion engines that use fuels including highly volatile hydrocarbons, for example, in vehicles and vessels that include internal-combustion engines. Examples of these vehicles may include motor vehicles that use gasoline as a fuel. Examples of these vessels may include boats that use gasoline as a fuel.

A formed adsorber, which is an embodiment of the present invention, may be a formed product including: an adsorbing material including activated carbon fiber; and a binder. The "adsorbing material including activated carbon fiber" may include activated carbon fiber only. Including activated carbon fiber only corresponds to a case where the entire "adsorber including activated carbon fiber" consists of activated carbon fiber. Furthermore, the "adsorbing material including activated carbon fiber" may include another or other adsorbing materials, and examples of the adsorbing materials may include porous materials, such as zeolite, silica gel, activated alumina, and metal organic frameworks (MOF), and preferably activated carbon materials other than activated carbon fiber, for example, granular activated carbon. That is, in another embodiment, a material included in the "adsorbing material including activated carbon fiber" may be a mixture including an adsorbing material, such as a material belonging to activated carbon materials in a broad sense.

Because the formed adsorber that is an embodiment of the present invention includes the adsorbing material that is activated carbon fiber, the formed adsorber may also be said to be a formed product including activated carbon fiber and a binder. In other words, the formed adsorber may be said to be an adsorbing material that is obtained by shaping activated carbon fiber using a binder. Mixing, not only activated carbon fiber, but also a binder in the shaping enables obtainment of a formed product having improved mechanical strength and being difficult to be deformed.

In an embodiment of the present invention, the binder is used as a component of the formed adsorber. The binder that may be used is preferably a binder that does not block pores of activated carbon fiber and activated carbon. Examples of its material may include aqueous solutions of polyvinyl alcohols. Furthermore, preferred examples of the binder may include fibrous binders. The binder may be a wet thermal adhesion type binder such as a fibrous polyvinyl alcohol binder. In addition, composite fiber, such as core-sheath fiber, side by side fiber, or radially divided fiber, may be used. Specifically, examples of the composite fiber may include: a combination of polypropylene (core) and polyethylene (sheath); a combination of polypropylene (core) and ethylene vinyl alcohol (sheath); a combination of high-melting-point polyester (core) and low-melting-point polyester (sheath); and a combination of high-melting-point polyester (core) and polyethylene (sheath).

Furthermore, fully melting fiber including only polyethylene or polypropylene may be used. In addition, a fibrous binder that has been fibrillated may be used. Fibrillation is not particularly limited and any fibrillation enabling activated carbon fiber and granular activated carbon to be entangled and shaped may be used. A wide range of binders including synthetic binders and naturally occurring binders are able to be used. Examples of the fibrillated fibrous binder may include acrylic fiber, polyethylene fiber, polypropylene fiber, polyacrylonitrile fiber, cellulose fiber, nylon fiber, and aramid fiber.

The ratio of the content of the binder in the formed adsorber to the content of the adsorbing material including activated carbon fiber in the formed adsorber may be, for example, 0.3 to 20 parts by weight of the binder to 100 parts by weight of the adsorbing material including activated carbon fiber. The lower limit for the binder may be preferably 0.5 parts by weight, 0.8 parts by weight, 1.0 parts by weight, 2.0 parts by weight, or 3.0 parts by weight. Furthermore, the upper limit for the binder may be preferably 18 parts by weight, 15 parts by weight, or 10 parts by weight. Such a content ratio enables preparation of the formed adsorber so that both mechanical strength and adsorption-desorption performance of the formed adsorber are achieved. If higher mechanical strength is desired, the amount of the binder may be increased and if adsorption-desorption performance is considered to be important, the amount of the binder may be set low.

The above content ratio is also applicable to a case where the adsorbing material including activated carbon fiber includes activated carbon fiber only, that is, a case where the adsorbing material including activated carbon fiber entirely consists of activated carbon fiber. That is, the ratio of the content of the binder in the formed adsorber to the content of the activated carbon fiber in the formed adsorber may be, for example, 0.3 to 20 parts per weight of the binder to 100 parts by weight of the activated carbon fiber. The lower limit for the binder may be preferably 0.5 parts by weight, 0.8 parts by weight, 1.0 parts by weight, 2.0 parts by weight, or 3.0 parts by weight. The upper limit for the binder may be preferably 18 parts by weight, 15 parts by weight, or 10 parts by weight. Similarly to the above, such a content ratio enables preparation of the formed adsorber so that both mechanical strength and adsorption-desorption performance of the formed adsorber are achieved. If higher mechanical strength is desired, the amount of the binder may be increased and if adsorption-desorption performance is considered to be important, the amount of the binder may be set low.

Furthermore, in another embodiment, the above described content ratio is also applicable to a case where the adsorbing material including activated carbon fiber is a mixture of activated carbon fiber and granular activated carbon. That is, the ratio of the content of the binder in the formed adsorber to the content of the mixture of activated carbon fiber and granular activated carbon may be, for example, 0.3 to 20 parts by weight of the binder to 100 parts by weight of the mixture of activated carbon fiber and granular activated carbon. The lower limit for the binder may be preferably 0.5 parts by weight, 0.8 parts by weight, 1.0 parts by weight, 2.0 parts by weight, or 3.0 parts by weight. Furthermore, the upper limit for the binder may be preferably 18 parts by weight, 15 parts by weight, or 10 parts by weight. Similarly to the above, such a content ratio enables preparation of the formed adsorber so that both mechanical strength and adsorption-desorption performance of the formed adsorber are achieved. If higher mechanical strength is desired, the amount of the binder may be increased and if adsorption-desorption performance is considered to be important, the amount of the binder may be set low.

Mixing the binder at the above described content ratio enables prevention of degradation of characteristics, such as adsorption-desorption performance and pressure loss, due to obstruction of micropores of activated carbon fiber, and enables excellent characteristics of activated carbon fiber to be maintained and a formed adsorber excellent in these characteristics to be obtained.

The formed adsorber, which is an embodiment of the present invention, does not exclude inclusion of components other than the activated carbon fiber and the binder, but addition of any other component should be allowed without disabling reduction of pressure loss. For example, granular activated carbon may be added.

Fiber Size of Activated Carbon Fiber

The lower limit of fiber size of the activated carbon fiber that may be used in the formed adsorber of the present invention may be preferably 13.0 $\mu$m or more, more preferably 14.0 $\mu$m or more, and even more preferably 15.0, 16.0, 17.0, 18.0, 19.0, or 20.0 $\mu$m or more.

The upper limit of fiber size in an activated carbon fiber sheet of the present invention may be optional in terms of reduction of pressure loss, but may be, for example, 60.0 $\mu$m or less, preferably 55.0 $\mu$m or less, and more preferably 50.0, 45.0, 40.0, or 35.0 $\mu$m.

Setting the fiber size of the fiber in the activated carbon fiber in the above range enables the activated carbon fiber to enable more reduction in pressure loss.

Mean Value of Fiber Length of Activated Carbon Fiber

The lower limit of fiber length of the activated carbon fiber that may be used in the formed adsorber of the present invention may be preferably 300 or more, more preferably 500, 600, 700, 800, 850, 900, or more, and even more preferably 950 or more.

The upper limit of fiber length in the activated carbon fiber sheet of the present invention may be preferably 5000 or less, more preferably 4000, 3000, 2500, 2000, 1500, or less, and even more preferably 1200 or less.

Setting the fiber length of the fiber in the activated carbon fiber in the above range enables obtainment of the activated carbon fiber enabling more reduction in pressure loss.

Coefficient of Variation of Fiber Length of Activated Carbon Fiber

The lower limit of coefficient of variation of fiber length of the activated carbon fiber that may be used in the formed adsorber of the present invention may be preferably 0.1 or more, more preferably 0.2, 0.3, 0.4, 0.5, or more, and even more preferably 0.6 or more.

The upper limit of coefficient of variation of fiber length in the activated carbon fiber sheet of the present invention may be preferably 2.5 or less, more preferably 2.0, 1.5, 1.0, 0.9, 0.8, or less, and even more preferably 0.7 or less.

Setting the fiber length of the fiber in the activated carbon fiber in the above range enables obtainment of the activated carbon fiber enabling more reduction in pressure loss.

Fineness of Precursor of Activated Carbon Fiber

To obtain the activated carbon fiber having the fiber size as described above, a fiber size (as fineness) of fiber serving as a precursor of the activated carbon fiber is preferably in the following range. That is, adopting the following fiber as the precursor may be said to be suitable for obtaining activated carbon fiber that enables reduction in pressure loss.

The lower limit of fiber size (as fineness) of the fiber serving as the precursor may be preferably 4.0 dtex or more, more preferably 5.0 dtex or more, and even more preferably 8.0, 10.0, 12.0, or 15.0 dtex or more.

The upper limit of fiber size (as fineness) of the fiber serving as the precursor may be preferably 60.0 dtex or less, more preferably 50.0 dtex or less, and even more preferably 40.0 or 30.0 dtex or less.

Fulfilling at least one or any two or more of given items described below enables provision of more preferable embodiments of the activated carbon fiber that may be used in the formed adsorber of the present invention.

Specific Surface Area

The lower limit of specific surface area of the activated carbon fiber that may be used in the formed adsorber of the present invention may be preferably 1100 $m^2/g$ or more, more preferably 1200 $m^2/g$ or more, and even more preferably 1300, 1400, 1500, 1600, 1700, or 1800 $m^2/g$ or more.

The specific surface area of the activated carbon fiber that may be used in the formed adsorber of the present invention is preferably large in general in terms of adsorption-desorption performance, but for the adsorbing material for canisters, the upper limit of the specific surface area may be about 2400, 2300, 2200, or 2100 $m^2/g$ or less.

Setting the specific surface area in the above range enables the formed adsorber to have more excellent adsorption-desorption performance for fuel vapor. Furthermore, in an embodiment of the present invention, a comparatively large specific surface area is able to be maintained for the above described adsorbing material used in a canister and pressure loss in the canister is able to be reduced.

Total Pore Volume

The lower limit of total pore volume of the activated carbon fiber that may be used in the formed adsorber of the present invention is preferably 0.50 $cm^3/g$ or more, more preferably 0.60 $cm^3/g$ or more, and even more preferably 0.70, 0.80, or 0.90 $cm^3/g$ or more.

The upper limit of total pore volume of the activated carbon fiber that may be used in the formed adsorber of the present invention may be preferably 1.20 $cm^3/g$ or less, more preferably 1.10 $cm^3/g$ or less, and even more preferably 1.00 $cm^3/g$ or less.

Setting the total pore volume in the above range enables the formed adsorber to have more excellent adsorption-desorption performance for fuel vapor.

Mean Pore Size (Mean Pore Diameter)

With respect to the present invention, the term, "pore size," means the diameter or width of a pore, rather than the radius of the pore, unless otherwise specified clearly.

The lower limit of mean pore size of the activated carbon fiber that may be used in the formed adsorber of the present invention is preferably 1.69 nm or more, more preferably 1.70 nm or more, and even more preferably 1.72, 1.75, 1.78, or 1.80 nm or more.

The upper limit of mean pore size of the activated carbon fiber that may be used in the formed adsorber of the present invention may be optional, but may be preferably 4.00 nm or less, more preferably 3.50 nm or less, and even more preferably 3.00 nm or less.

Setting the mean pore size in the above range enables the formed adsorber to have more excellent adsorption-desorption performance for fuel vapor.

Ultramicropore Volume: $V_{0.7}$

With respect to the present invention, the term "ultramicropore" means a pore having a pore size of 0.7 nm or less.

The lower limit of ultramicropore volume of the activated carbon fiber that may be used in the formed adsorber of the present invention may be preferably 0.05 $cm^3/g$ or more, more preferably 0.10 $cm^3/g$ or more, and even more preferably 0.12 or 0.14 $cm^3/g$ or more.

The upper limit of ultramicropore volume of the activated carbon fiber that may be used in the formed adsorber of the present invention may be preferably 0.30 $cm^3/g$ or less, more preferably 0.29 $cm^3/g$ or less, and even more preferably 0.26, 0.24, 0.22, or 0.20 $cm^3/g$ or less.

Setting the ultramicropore volume in the above range enables the formed adsorber to have more excellent adsorption-desorption performance for fuel vapor.

Micropore Volume: $V_{2.0}$

With respect to the present invention, the term "micropore" means a pore having a pore size of 2.0 nm or less.

The lower limit of micropore volume of the activated carbon fiber that may be used in the formed adsorber of the present invention may be preferably 0.50 cm$^3$/g or more, more preferably 0.60 cm$^3$/g or more, and even more preferably 0.65 or 0.70 cm$^3$/g or more.

The upper limit of micropore volume of the activated carbon fiber that may be used in the formed adsorber of the present invention may be preferably 1.00 cm$^3$/g or less, more preferably 0.90 cm$^3$/g or less, and even more preferably 0.80 cm$^3$/g or less.

Setting the micropore volume in the above range enables the formed adsorber to have more excellent adsorption-desorption performance for fuel vapor.

Pore Volume of Pores Having Pore Size Larger than 0.7 nm and Equal to or Smaller than 2.0 nm: $V_{0.7\text{-}2.0}$

A pore volume $V_{0.7\text{-}2.0}$ of pores having pore sizes larger than 0.7 nm and equal to or smaller than 2.0 nm is able to be determined by Equation 1 below using a value "a" of ultramicropore volume and a value "b" of micropore volume.

$$V_{0.7\text{-}2.0} = b - a \qquad \text{(Equation 1)}$$

The lower limit of the pore volume $V_{0.7\text{-}2.0}$ of the pores in the activated carbon fiber that may be used in the formed adsorber of the present invention, the pores having the pore sizes larger than 0.7 nm and equal to or smaller than 2.0 nm, may be preferably 0.20 cm$^3$/g or more, more preferably 0.30 cm$^3$/g or more, and even more preferably 0.36, 0.40, 0.45, or 0.50 cm$^3$/g or more.

The upper limit of the pore volume $V_{0.7\text{-}2.0}$ of the pores in the activated carbon fiber that may be used in the formed adsorber of the present invention, the pores having the pore diameters larger than 0.7 nm and equal to or smaller than 2.0 nm, may be preferably 1.20 cm$^3$/g or less, more preferably 1.00 cm$^3$/g or less, and even more preferably 0.90, 0.80, 0.75, 0.70, 0.65, or 0.60 cm$^3$/g or less.

Setting the pore volume $V_{0.7\text{-}2.0}$ in the above range enables the formed adsorber to have more excellent adsorption-desorption performance for fuel vapor.

Ratio of Volume of Ultramicropores to Volume of Micropores: $R_{0.7/2.0}$

A ratio $R_{0.7/2.0}$ of the pore volume of ultramicropores having pore sizes of 0.7 nm or less to the pore volume of micropores having pore sizes of 2.0 nm or less is able to be determined by Equation 2 below using the value "a" of the ultramicropore volume and the value "b" of the micropore volume.

$$R_{0.7/2.0} = a \ / \ b \times 100(\%) \qquad \text{(Equation 2)}$$

The lower limit of the ratio $R_{0.7/2.0}$ of the ultramicropore volume to the micropore volume in the activated carbon fiber that may be used in the formed adsorber of the present invention may be preferably 15.0% or more, more preferably 18% or more, and even more preferably 19% or more.

The upper limit of the ratio $R_{0.7/2.0}$ of the ultramicropore volume to the micropore volume in the activated carbon fiber that may be used in the formed adsorber of the present invention may be preferably 60% or less, more preferably 50% or less, and even more preferably 40, 30, or 25% or less.

Setting the ultramicropore volume ratio $R_{0.7/2.0}$ in the above range enables the formed adsorber to have more excellent adsorption-desorption performance for fuel vapor.

Dry Density

The lower limit of dry density of the formed adsorber of the present invention may be preferably 0.010 g/cm$^3$ or more, more preferably 0.015 g/cm$^3$ or more, and even more preferably 0.020, 0.030, 0.040, 0.050, or 0.060 g/cm$^3$ or more.

The upper limit of dry density of the formed adsorber of the present invention may be preferably 0.400 g/cm$^3$ or less, more preferably 0.300 g/cm$^3$ or less, and even more preferably 0.200, 0.150, 0.140, 0.130, 0.120, 0.110, or 0.100 g/cm$^3$ or less.

Setting the dry density in the above range enables the formed adsorber to have more excellent adsorption-desorption performance per volume demanded for use in a canister within a range of the volume of the adsorbing material that is able to be stored in the canister. Furthermore, having the dry density at or higher than the above lower limit enables the mechanical properties (for example, the strength) to be prevented from being deteriorated. Furthermore, the dry density of the formed adsorber is able to be adjusted by changing the fiber size of the carbon fiber, changing the fiber length by adjustment of stirring force at the time of defibrillating the carbon fiber, or changing the sucking force at the time of subjecting the mixed slurry containing the binder to suction forming, and the pressure loss in the formed adsorber is thereby able to be reduced.

Moisture Content

The formed adsorber of the present invention preferably has a given moisture content. For example, the lower limit of moisture content at 23°C and a relative humidity of 50% may be preferably 1.0% or more, more preferably 2.0% or more, and even more preferably 3.0% or more.

Furthermore, the upper limit of moisture content at 23°C and the relative humidity of 50% may be preferably 30.0 or 25.0% or less, more preferably 20.0% or less or 15.0% or less, and even more preferably 10.0 or 8.0% or less.

Setting the moisture content in the above range under the above conditions enables the formed adsorber to be more excellent as an adsorbing material for motor vehicle canisters.

N-butane Adsorption-Desorption Performance

The formed adsorber of the present invention preferably has, as an adsorbing material, given n-butane adsorption-desorption performance. The n-butane adsorption-desorption performance serves as an index of adsorption-desorption performance for vapor and any adsorbing material having excellent n-butane adsorption-desorption performance is thus suitable for use in motor vehicle canisters. The n-butane adsorption-desorption performance can be expressed as an effective adsorption amount ratio for n-butane, which is determined with an amount of adsorbed n-butane per a formed adsorber when adsorption is repeated after the desorption of n-butane from the adsorbing material under given desorption conditions after sufficient absorption breakthrough of n-butane in the adsorbing material has been performed.

In a preferred embodiment of the formed adsorber of the present invention, an effective adsorption-desorption amount ratio for n-butane determined by a measurement method described with respect to Examples below may be preferably 6.00% by weight or more, more preferably 6.25% by weight or more, and even more preferably 6.50, 6.75, or 7.00% by weight or more.

Furthermore, in preferred embodiments of the formed adsorber of the present invention, the effective adsorption-desorption ratio for n-butane determined according to the measurement method described with respect to Examples below may be preferably 25.0% or more, more preferably 30.0% or more, and even more preferably 40.0, 50.0, 60.0, 70.0, or 75.0% or more. An adsorbing material having such an adsorption-desorption ratio is suitable for use in canisters, in particular, for use in motor vehicle canisters.

0-ppm Maintaining Time

In preferred embodiments of the formed adsorber of the present invention, the 0-ppm maintaining time determined according to a measurement method described with respect to Examples below may be preferably 15 minutes or 30 minutes or more, more preferably 40 minutes or more, and even more preferably 50 minutes, 55 minutes, 60 minutes, 65 minutes, 68 minutes, 69 minutes, or 70 minutes or more.

Longer 0-ppm maintaining time means the longer it takes for the adsorbing material to start releasing the adsorbed substance. Therefore, the 0-ppm maintaining time serves as an index of the adsorptivity.

The formed adsorber of the present invention for a canister is suitable for use in a canister mounted in a motor vehicle. The formed adsorber preferably enables reduction of pressure loss. The upper limit of pressure loss may be preferably 1.50 kPa or less, more preferably 1.20 kPa or less, and even more preferably 1.10, 1.00, 0.90, 0.80, or 0.70 kPa, or less. This does not mean that the lower the pressure loss the better, and in terms of the adsorption performance for the intended purpose, the lower limit of pressure loss may be preferably 0.05 kPa or more, more preferably 0.10 kPa or more, and even more preferably 0.15 kPa or more.

2. Shape of Formed Adsorber

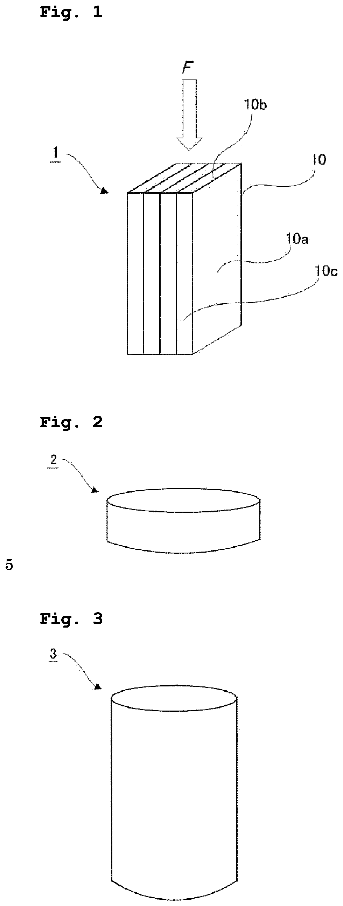

In an embodiment of the present invention, the shape of the formed adsorber is not particularly limited, and for example, a preferred shape of the formed adsorber is able to be molded and allows gas to flow therethrough. Specific examples of the shape include: a column shape having end faces that are circular or polygonal; a frustum shape, such as a truncated cone shape or a prismoid shape; a pellet shape; and a honeycomb shape, and preferably include cylinder shapes and cuboid shapes. Furthermore, plural disk-shaped, sheet-shaped, or plate-shaped adsorbers may be layered over one another to form a layered product. FIG. 1 to FIG. 3 illustrate some embodiments. Dimensions, such as lengths and thicknesses in the drawings have been schematically illustrated to allow the invention to be readily understood and are thus not limited to those illustrated in the drawings.

A layered adsorber 1 illustrated in FIG. 1 is a layered product formed of four sheet-formed adsorbers 10 superposed on one another. Major surfaces 10a of the sheet-formed adsorbers 10 are superposed on one another for the formation.

The layered adsorber 1 may be stored in a canister in any way. In a preferred embodiment, the layered adsorber 1 may be arranged so that the direction in which the sheets are high in tensile strength is along the flow of gas. Furthermore, in a more specific preferred embodiment, for example, the layered adsorber 1 is preferably arranged so that the major surfaces 10a of the sheet-formed adsorbers are not orthogonal to the direction of flow of fluid F, such as vapor, and more preferably, as illustrated in FIG. 1, the layered adsorber 1 may be arranged so that the major surfaces a become approximately parallel to the direction of flow of the fluid F, such as vapor. Arranging the major surfaces a approximately parallel to the flow direction of the fluid F, such as vapor, places lateral end surfaces 10b of the plural sheet-formed adsorbers to be against the flow direction of the fluid F. This arrangement enables reduction in pressure loss. In FIG. 1, the lateral end surfaces 10b shorter in length are against the flow direction of the fluid F, but without being limited to this arrangement, longer lateral end surfaces 10c may be arranged to be against the flow direction of the fluid F.

Furthermore, the overall shape of the layered adsorber may be cuboidal or cubical. In addition, the overall shape of the layered adsorber may be made to conform to the shape of the adsorbing material chamber to store the layered adsorber.

FIG. 2 illustrates another embodiment of the present invention. In the embodiment illustrated in FIG. 2, the formed adsorber has been shaped to be disk-shaped. Such disk-shaped adsorbers may be superposed on one another to form a cylindrical product.

FIG. 3 illustrates another embodiment of the present invention. In the embodiment illustrated in FIG. 3, the formed adsorber has been integrally shaped as a cylinder-shaped product.

The formed adsorber of the present invention is able to be processed or shaped in various shapes readily and is a material that is very easy to use.

3. Canister

The formed adsorber of the present invention is suitable as an adsorbing material to be stored in a motor vehicle canister. That is, the present invention enables provision of a motor vehicle canister that is another embodiment.

The motor vehicle canister of the present invention has an adsorbing material placed therein, the adsorbing material being a formed adsorber. The motor vehicle canister has a structure that is not particularly limited, and may have any common structure. For example, the motor vehicle canister may be a motor vehicle canister having the following structure.

A canister comprising:

a housing;
an adsorbing material chamber to store an adsorbing material in the housing;
a first opening to connect between the adsorbing material chamber and an engine and allow gas to move between the adsorbing material chamber and the engine;
a second opening to connect between the adsorbing material chamber and a fuel tank and allow gas to move between the adsorbing material chamber and the fuel tank; and
a third opening to open in response to application of a given pressure to the third opening from the adsorbing material chamber or from outside air, connect between the adsorbing material chamber and the outside air, and allow gas to move between the adsorbing material chamber and the outside air.

For this canister of the present invention, the above described formed adsorber of the present invention may be used as an adsorbing material. As described above, because the formed adsorber of the present invention enables reduction in pressure loss, even if the canister is fully filled with the formed adsorber, pressure loss is able to be reduced more than that in a case where a canister is filled with conventional activated carbon fiber sheets.

The first, second, and third openings are inlet-outlets through which gas is let in and let out. The arrangement of these openings that are inlet-outlets for gas is not particularly limited, but the third opening that is an inlet-output for outside air is preferably arranged at a position enabling gas to sufficiently pass through the adsorbing material when the gas moves between: the third opening; and the first opening and/or second opening. For example, in embodiments that may be adopted, the first and second openings are provided on a first lateral surface of the housing and the third opening is provided on a second lateral surface located opposite to the first lateral surface.

The adsorbing material chamber may have more than one chamber. For example, the adsorbing material chamber may be divided into two or more sections by partition walls. The partition walls to be used may be porous plates having gas permeability. Furthermore, an additional adsorbing material chamber may be installed by provision of an external second housing separately from the first housing so that the first housing and the second housing are connected to each other via a gas passage. In a case where plural sections or housings are provided as described above, in a preferred embodiment, adsorbing materials or adsorbing material chambers may be arranged so that adsorption capacities in these sections or housings decrease sequentially from one section or housing to the next, from the first or second opening, into which gas from the engine or the fuel tank flows, toward the third opening.

Specific examples include a composite canister including a main canister (a first housing) and a second canister (a second housing) that is additionally provided to the main canister and that is near the intake for outside air. When plural sections or housings are provided as described above, a high performance canister is able to be provided with reduced cost. Such a high performance canister has: a main body (a first section or a first housing) with the largest storage capacity; and a second or later section or housing with a relatively smaller storage capacity. The main body is a section or housing where vapor from the engine or fuel tank flows into first and conventional and inexpensive activated carbon is to be stored. The second or later section or housing is to store the formed adsorber of the present invention having excellent adsorption-desorption performance for a low concentration.

When there is more than one adsorbing material chamber, fuel vapor flowing, from a preceding layer, into an adsorbing material chamber positioned downstream from the engine or fuel tank (that is, the adsorbing material chamber positioned closer to the inlet-outlet for outside air) has become lower in concentration. Therefore, the formed adsorber of the present invention having high n-butane adsorption performance for a low concentration of about 0.2% is suitable as an adsorbing material to be stored in a second section or second housing or a more downstream adsorbing material chamber. This second section or housing or the more downstream adsorbing material chamber is positioned downstream from the engine or fuel tank. Furthermore, use of the formed adsorber of the present invention in the adsorbing material chamber closer to the intake for outside air enables reduction in the amount of leakage of fuel vapor upon long-term stoppage of the motor vehicle because the effective amount of adsorption-desorption by the activated carbon fiber sheet of the present invention through purging is large. In view of this effect also, the formed adsorber of the present invention is suitable as an adsorbing material to be used in a motor vehicle canister.

Therefore, a preferred embodiment of the canister may be, for example, the following embodiment.

A motor vehicle canister comprising two or more adsorbing material chambers, wherein

a second or later adsorbing material chamber/chambers arranged downstream from a first adsorbing material chamber where gas from an engine or a fuel tank flows into first has the formed adsorber of the present invention stored therein.

In the above embodiment, the number of adsorbing material chambers may be two or more. Furthermore, if the number of adsorbing material chambers is three or more, the formed adsorber of the present invention may be stored in at least one of these adsorbent material chambers that is the second adsorbing material chamber or an adsorbing material chamber downstream from the second adsorbent chamber.

4. Method of Manufacturing Formed Adsorber

The activated carbon fiber used in the present invention may be manufactured by carbonizing and activating fiber having a given fiber size. The fiber before the carbonization and activation is referred to herein as precursor fiber and a sheet formed of the precursor fiber is referred to herein as a precursor fiber sheet. With respect to the present invention, the term, "fiber size," means the diameter or width of fiber, rather than the radius of the fiber, unless otherwise specified clearly. Furthermore, the term, "fiber size," is mainly used for fiber of activated carbon fiber that has been carbonized and activated.

Embodiments for manufacture of an activated carbon fiber sheet will hereinafter be described as methods of manufacturing the activated carbon fiber. Examples of a preferred embodiment of a method of manufacturing the activated carbon fiber sheet may include the following method.

A method including carbonizing and activating a precursor fiber sheet holding any one or both of a phosphoric acid-based catalyst or an organic sulfonic acid-based catalyst, wherein

the precursor fiber sheet includes cellulosic fiber having a fiber size ranging from 4.0 to 60.0 dtex.

The lower limit of the fiber size (fineness) of the fiber serving as a precursor may be preferably 4.0 dtex or more, more preferably 5.0 dtex or more, and even more preferably 8.0, 10.0, 12.0, or 15.0 dtex or more.

The upper limit of the fiber size (fineness) of the fiber serving as the precursor may be preferably 60.0 dtex or less, more preferably 50.0 dtex or less, and even more preferably 40.0 or 30.0 dtex or less.

Setting the fiber size of the fiber serving as the precursor in the above range enables obtainment of the activated carbon fiber sheet enabling reduction in pressure loss.

A method of manufacturing sheet-shaped activated carbon fiber that may be used in the present invention may be implemented by reference to, for example, the following information.

4-1. Preparation of Raw Material Sheet

(Precursor Fiber Sheet)

Type of Fiber

Examples of fiber forming a raw material sheet may include cellulosic fiber, pitch-based fiber, PAN-based fiber, and phenol resin-based fiber, and preferably include cellulosic fiber.

Cellulosic Fiber

The cellulosic fiber refers to fiber composed mainly of cellulose and/or a derivative thereof. Origins of cellulose and cellulose derivatives may be any one or more of examples including chemically synthesized products, plant derived cellulose, regenerated cellulose, and cellulose produced by bacteria. Examples of the cellulosic fiber that may be preferably used include: fiber formed of a plant cellulose material obtained from plants, such as trees; and fiber formed of a long fibrous regenerated cellulose material obtained by dissolution of a plant cellulose material (such as cotton or pulp) through chemical treatment. The fiber may contain a component or components, such as lignin and/or hemicellulose.
Examples of raw materials for the cellulosic fiber (the plant cellulose material or regenerated cellulose material) may include: plant cellulose fiber, such as cotton (such as short fiber cotton, medium fiber cotton, long fiber cotton, super long cotton, and ultra super long cotton), hemp, bamboo, kozo, mitsumata, banana, and tunicates; regenerated cellulose fiber, such as cuprammonium rayon, viscose rayon, polynosic rayon, and cellulose made from bamboo; purified cellulose fiber spun by use of organic solvent (N-methylmorpholine N-oxide); and acetate fiber, such as diacetate and triacetate. In terms of availability, at least one selected from cuprammonium rayon, viscose rayon, and purified cellulose fiber is preferable among these examples.
The form of the cellulosic fiber is not particularly limited, and depending on the purpose, the cellulosic fiber prepared into a form of, for example, raw yarn (unprocessed yarn), false twisted yarn, dyed yarn, single yarn, folded yarn, or covering yarn, may be used. In a case where the cellulosic fiber includes two or more kinds of raw materials, the cellulosic fiber may be, for example, blended yarn or blended twisted yarn. Furthermore, the above-mentioned raw materials in various forms may be used alone or in combination of two or more, as the cellulosic fiber. Non-twisted yarn is preferred among the above-mentioned raw materials for both moldability and mechanical strength of the composite material.

Fiber Sheet

A fiber sheet refers to a sheet obtained by processing a large number of filaments of fiber into a thin and wide sheet. Fiber sheets include woven fabric, knitted fabric, and nonwoven fabric.
Methods of weaving the cellulosic fiber are not particularly limited, and any common method may be used. Weaves of the woven fabric are not particularly limited either, and any of three foundation weaves, a plain weave, a twill weave, and a satin weave, may be used.
Spaces between warp yarns and between weft yarns of the cellulosic fiber in the woven fabric formed of the cellulosic fiber may range preferably from 0.1 to 0.8 mm, more preferably from 0.2 to 0.6 mm, and even more preferably from 0.25 to 0.5 mm. Furthermore, the woven fabric formed of the cellulosic fiber may have a mass per unit area ranging preferably from 50 to 500 g/$m^2$ and more preferably from 100 to 400 g/$m^2$.
Setting the spaces and the mass per unit area of the cellulosic fiber and the woven fabric formed of the cellulosic fiber in the above ranges enables carbon fiber woven fabric obtained by heat treatment of the woven fabric to have excellent strength.
Methods of manufacturing the nonwoven fabric are also not particularly limited. Examples of the methods may include: a method where a fiber sheet is obtained by use of a dry method or a wet method with the above-mentioned fiber serving as a raw material and having been cut into appropriate lengths; and a method where a fiber sheet is directly obtained from a solution using, for example, an electrospinning method. After the nonwoven fabric is obtained, treatment, such as resin bonding, thermal bonding, spun lacing, or needle punching, may be added for the purpose of bonding the filaments of fiber together.

4-2. Catalyst

In Embodiment 1 of a manufacturing method, a catalyst is held by the raw material sheet prepared as described above. The raw material sheet holding the catalyst is carbonized and further activated by using gas, such as water vapor, carbon dioxide, or air gas, and a porous activated carbon fiber sheet is thereby able to be obtained. Examples of the catalyst that may be used include a phosphoric acid-based catalyst and an organic sulfonic acid-based catalyst.

Phosphoric Acid-based Catalyst

Examples of the phosphoric acid-based catalyst may include: oxyacids of phosphorus, such as phosphoric acid, metaphosphoric acid, pyrophosphoric acid, phosphorous acid, phosphonic acid, phosphonous acid, and phosphinic acid; ammonium dihydrogen phosphate, diammonium hydrogen phosphate, triammonium phosphate, dimethyl phosphono propanamide, ammonium polyphosphate, and polyphosphonitrile chloride; and condensation products between: phosphoric acid, tetrakis (hydroxymethyl) phosphonium salt, or tris (1-aziridinyl) phosphine oxide; and urea, thiourea, melamine, guanine, cyanamide, hydrazine, dicyandiamide, or a methylol derivative of any one of these. Preferable examples may include diammonium hydrogen phosphate. One kind of phosphoric acid-based catalysts may be used alone or two or more kinds of phosphoric acid-based catalysts may be used in combination. In a case where the phosphoric acid-based catalyst is used in the form of an aqueous solution, the phosphoric acid-based catalyst in the aqueous solution has a concentration ranging preferably from 0.05 to 2.0 mol/L and more preferably from 0.1 to 1.0 mol/L.

Organic Sulfonic Acid-based Catalyst

An organic compound having one or more sulfo groups is able to be used as the organic sulfonic acid. For example, a compound in which a sulfo group is bonded to any of various carbon skeletons of aliphatic series or aromatic series is able to be used. A preferred organic sulfonic acid-based catalyst has a low molecular weight in terms of handling of the catalyst.

Examples of the organic sulfonic acid-based catalyst may include compounds represented by $R-SO_3H$ where: R is a linear or branched alkyl group having 1 to 20 carbon atoms, a cycloalkyl group having 3 to 20 carbon atoms, or an aryl group having 6 to 20 carbon atoms; and each of the alkyl group, the cycloalkyl group and the aryl group optionally has a substituent of an alkyl group, a hydroxyl group, or a halogen group. Examples of the organic sulfonic acid-based catalyst may include methanesulfonic acid, ethanesulfonic acid, propanesulfonic acid, 1-hexanesulfonic acid, vinylsulfonic acid, cyclohexanesulfonic acid, p-toluenesulfonic acid, p-phenolsulfonic acid, naphthalenesulfonic acid, benzenesulfonic acid, and camphorsulfonic acid. Methanesulfonic acid may be preferably used among these examples. Furthermore, one kind of these organic sulfonic acid-based catalysts may be used alone, or two or more kinds of these organic sulfonic acid-based catalysts may be used in combination.

In a case where the organic sulfonic acid is used in the form of an aqueous solution, the organic sulfonic acid in the aqueous solution has a concentration ranging preferably from 0.05 to 2.0 mol/L and more preferably from 0.1 to 1.0 mol/L.

Mixed Catalyst

The above-mentioned phosphoric acid-based catalyst and organic sulfonic acid-based catalyst may be mixed and used as a mixed catalyst. The mixing ratio may be adjusted as appropriate.

Holding of Catalyst

The catalyst is held by the raw material sheet. "Being held" means that the catalyst is kept in contact with the raw material sheet, and the catalyst may be held in various forms through, for example, adhesion, adsorption, or impregnation. Methods for the catalyst to be held by the raw material sheet are not particularly limited and may include, for example, a method of immersing the raw material sheet in an aqueous solution containing the catalyst, a method of sprinkling an aqueous solution containing the catalyst over the raw material sheet, a method of causing the raw material sheet to be in contact with vapor that is the catalyst that has been vaporized, and a method of mixing the fiber of the raw material sheet into an aqueous solution containing the catalyst to make paper.

A method that is able to be preferably used for sufficient carbonization is a method of immersing the raw material sheet in an aqueous solution containing the catalyst to impregnate the fiber with the catalyst such that the catalyst reaches the inside of the fiber. The temperature for the immersion in the aqueous solution containing the catalyst is not particularly limited and may be preferably room temperature. The immersion time ranges preferably from 10 seconds to 120 minutes and more preferably from 20 seconds to 30 minutes. The immersion allows the fiber forming the raw material sheet to adsorb, for example, 1 to 150% by mass and preferably 5 to 60% by mass, of the catalyst. After the immersion, the raw material sheet is preferably taken out from the aqueous solution and dried. A method of drying the raw material sheet may be, for example, any of methods including a method of leaving the raw material sheet to stand at room temperature or putting the raw material sheet in a dryer. The drying may be performed until the sample no longer changes in weight by evaporation of excess moisture after the sample is removed from the aqueous solution containing the catalyst. For example, in the drying at room temperature, the drying time over which the raw material sheet is left to stand may be 0.5 days or more. When the raw material sheet holding the catalyst almost no longer changes in mass through the drying, the step of carbonizing the raw material sheet holding the catalyst is performed.

4-3. Carbonization Treatment

After being prepared, the raw material sheet holding the catalyst is subjected to carbonization treatment. The carbonization treatment for obtaining the activated carbon fiber sheet may be performed according to a common method of carbonizing activated carbon. In preferred embodiments, the carbonization treatment may be performed as follows.

The carbonization treatment is usually performed under an inert gas atmosphere. According to the present invention, the inert gas atmosphere means an oxygen-free or low-oxygen atmosphere in which carbon is difficult to undergo a combustion reaction and is thus carbonized. The inert gas atmosphere may be preferably an atmosphere including gas, such as argon gas or nitrogen gas.

The raw material sheet holding the catalyst is subjected to heat treatment and carbonized in the given gas atmosphere mentioned above.

The lower limit of the heating temperature may be preferably 300°C or higher, more preferably 350°C or higher, and even more preferably 400°C or higher or 750°C or higher.

The upper limit of the heating temperature may be preferably 1400°C or lower, more preferably 1300°C or lower, and even more preferably 1200°C or lower or 1000°C or lower.

Setting the heating temperature as described above enables obtainment of a carbon fiber sheet with its fiber form maintained. If the heating temperature is lower than the above-mentioned lower limit, the carbon fiber may have a carbon content of 80% or less and carbonization thus tends to be insufficient.

The lower limit of the heat treatment time including the time for the temperature to rise may be preferably 10 minutes or more, more preferably 11 minutes or more, even more preferably 12 minutes, 15 minutes, 20 minutes, 25 minutes, or more, and still even more preferably 30 minutes or more.

The upper limit of the heat treatment time may be optional, but may be preferably 180 minutes or less, more preferably 160 minutes, and even more preferably 140 minutes or less.

Sufficiently impregnating the raw material sheet with the catalyst, setting the above-mentioned suitable heating temperature, and adjusting the heat treatment time enable adjustment of the degree of progress of pore formation and thus adjustment of the physical properties of the porous body, such as the specific surface area, the volumes of various pores, and the mean pore diameter.

If the heat treatment time is shorter than the above lower limit, carbonization tends to be insufficient.

Furthermore, the heat treatment may include further reheating treatment in a given gas atmosphere after the above described heat treatment (which may be referred to as primary heat treatment). That is, the carbonization treatment may be performed by dividing the heat treatment into two or more stages having different conditions, such as temperature conditions. Performing the primary heat treatment and the reheating treatment under given conditions may enable adjustment of the physical properties, promotion of the carbonization and the subsequent activation, and thus obtainment of an activated carbon fiber sheet having excellent adsorption-desorption performance.

4-4. Activation Treatment

Activation treatment according to the present invention may be, for example, performed continuously after the above described heat treatment, by providing water vapor, carbon dioxide, or an alkaline agent and keeping an appropriate activation temperature for a given time, and enables obtainment of the activated carbon fiber sheet.

The lower limit of the activation temperature may be preferably 300°C or higher, more preferably 350°C or higher, and even more preferably 400, 500, 600, 700, or 750°C or higher.

The upper limit of the activation temperature, on the other hand, may be preferably 1400°C or lower, more preferably 1300°C or lower, and even more preferably 1200 or 1000°C or lower.

In a case where the activation treatment is performed continuously after the heat treatment, the activation temperature is preferably adjusted to a temperature that is almost the same as the heat treatment temperature.

The lower limit of the activation time may be preferably one minute or more, and more preferably five minutes or more.

The upper limit of the activation time may be optional, but may be preferably 180 minutes or less, more preferably 160 minutes or less, and even more preferably 140 minutes or less, 100 minutes or less, 50 minutes or less, or 30 minutes or less.

4-5. Manufacture of Shaped Product

A method of manufacturing a shaped product including a binder and an adsorbing material including activated carbon fiber is not particularly limited but the shaped product is able to be obtained by, for example, preparing a mixture of the adsorbing material and the binder and shaping the mixture. In an embodiment, for example, the shaped product is able to be manufactured as follows.

Preparation of Slurry Including Activated Carbon Fiber and Binder

An activated carbon fiber sheet and a binder that have been prepared in advance are mixed into water, are mixed together through defibrillation and dispersion in a mixer, and slurry including both the activated carbon fiber sheet and the binder is thereby able to be obtained. The activated carbon fiber sheet to be put into the mixer may be put into the mixer after being made into small pieces having appropriate sizes, depending on the size of the mixer.

Formation of Shaped Product

The thus obtained slurry including the activated carbon fiber and the binder is poured into metal molds having desired shapes, moisture is removed from the poured slurry while the metal molds are being pressed, the molded slurry is thereafter dried, and a formed adsorber is thereby able to be obtained.

**Examples**

The present invention will hereinafter be described more specifically by reference to Examples, but the technical scope of the present invention is not limited to Examples below.

Various items related to physical properties and performance of activated carbon fiber were measured and evaluated by methods described below. Various numerical values defining the present invention are able to be determined by the following measurement methods and evaluation methods.

Fiber Size

The fiber size was determined from a mean value, by randomly sampling ten filaments of fiber from an image with a magnification of 500 and measuring the sampled ten filaments of fiber using a scanning electron microscope, JSM-IT300 InTouchScope (manufactured by JEOL Ltd.).

Mean Value of Fiber Length

A mean value of the fiber length was determined by randomly sampling 20 filaments of fiber from an image with a magnification of 50 and measuring the sampled 20 filaments of fiber using DIGITAL MICROSCOPE KH-8700 (manufactured by Hirox Co., Ltd.).

Standard Deviation of Fiber Length

A standard deviation of the fiber length was determined by randomly sampling 20 filaments of fiber from an image with a magnification of 50 and measuring the sampled 20 filaments of fiber using DIGITAL MICROSCOPE KH-8700 (manufactured by Hirox Co., Ltd.).

Coefficient of Variation of Fiber Length

A coefficient of variation of the fiber length was calculated from the standard deviation/the mean value.

Specific Surface Area

About 30 mg of a measurement sample (such as an activated carbon fiber sheet) were sampled, vacuum-dried at 200°C for 20 hours, weighed, and measured using a high-precision gas/vapor adsorption amount measuring apparatus, BELSORP-MAX II (MicrotracBEL Corp.). The amount of nitrogen gas adsorbed at the boiling point of liquid nitrogen (77 K) was measured at a relative pressure ranging from the $10^{-8}$ order to 0.990, and an adsorption isotherm of the sample was thereby prepared. This adsorption isotherm was analyzed by the BET method for which the relative pressure range for analysis had been automatically determined under the conditions of the adsorption isotherm of Type I (ISO 9277), and the BET specific surface area per weight (unit: $m^2/g$) was determined as a specific surface area (unit: $m^2/g$).

Total Pore Volume

The total pore volume (unit: $cm^3/g$) by a one-point method was calculated on the basis of the result at the relative pressure of 0.960 on the adsorption isotherm obtained according to the above section related to the specific surface area.

Mean Pore Size (Mean Pore Diameter) Calculation was performed using Equation 3 below.

$$\text{Mean pore diameter (unit: nm)} = 4 \times \text{total pore volume}$$
$$\times\ 10^3 \div \text{specific surface area} \qquad \text{(Equation 3)}$$

Ultramicropore Volume

The adsorption isotherm obtained according to the above section related to the specific surface area was analyzed using the analysis software BELMaster pertaining to the high-precision gas/vapor adsorption amount measuring apparatus, BELSORP-MAX II (MicrotracBEL Corp.) through the GCMC method with the analysis settings set as follows: "Smoothing (moving average processing using one point each before and after every analyzed point of the pore distribution)," "Distribution function: No-assumption," "Definition of pore size: Solid and Fluid Def. Pore Size," and "Kernel: Slit-C-Adsorption." The integrated pore volume at 0.7 nm was read from the obtained pore distribution curve for adsorption, the integrated pore volume serving as the ultramicropore volume (unit: $cm^3/g$).

Micropore Volume

The adsorption isotherm obtained according to the above section related to the specific surface area was analyzed using the analysis software, BELMaster, pertaining to the high-precision gas/vapor adsorption amount measuring apparatus, BELSORP-MAX II (MicrotracBEL Corp.), through the GCMC method with the analysis settings set as follows: "Smoothing (moving average processing using one point each before and after every analyzed point of the pore distribution)," "Distribution function: No-assumption," "Definition of pore size: Solid and Fluid Def. Pore Size," and "Kernel: Slit-C-Adsorption." The integrated pore volume at 2.0 nm was read from the obtained pore distribution curve for adsorption, the integrated pore volume serving as the micropore volume (unit: $cm^3/g$).

Measurement of Formed Adsorber

The formed adsorber was left to stand for 12 hours or more under the environment where humidity was $23 \pm 2°C$ and a relative humidity was $50 \pm 5\%$ and sizes of the formed adsorber were thereafter measured using vernier calipers and a ruler. Furthermore, the weight of the formed adsorber was measured using an electrobalance.

Density of Formed Adsorber

Calculation was performed using Equation 4 below.

$$\text{Equation 4}$$
$$\text{Density (unit: } g/cm^3) = \text{weight of formed adsorber} \div$$
$$\text{volume of formed adsorber} \times 100$$

The volume of the formed adsorber was calculated from results of the measurement of the formed adsorber or determined from the sizes of the metal molds for the formed adsorber.

Moisture Content

The measurement sample was left to stand for 12 hours or more under the environment where the temperature was $23 \pm 2°C$ and the relative humidity was $50 \pm 5\%$, 0.5 to 1.0 g of that measurement sample was thereafter collected as a sample and dried at $115 \pm 5°C$ for three hours or more in a dryer, and moisture (unit: %) was determined from change in weight of the dried sample.

N-butane Adsorption-Desorption Performance

The concentration and flow rate of n-butane and the flow rate of air for desorption were independently set to perform tests by reference to Standard Test Method for Determination of Butane Working Capacity of Activated Carbon (ASTM D5228-16) of the American Society for Testing and Materials Standards.

The formed adsorber was dried at 115 ± 5°C for 3 hours or more in a dryer and the weight of the dried formed adsorber was measured after the dried formed adsorber was cooled. The mass of an empty adsorption container (a stainless-steel frame container that has the same cross-sectional shape as the formed adsorber and allows gas to flow therethrough) was measured and the adsorption container was then filled with the formed adsorber.

Subsequently, the test tube is placed in a flow apparatus and n-butane gas diluted with air to a concentration of 0.2% is fed into the test tube at 1.0 L/min at a test temperature of 25°C to cause adsorption of n-butane. The test tube is removed from the flow apparatus and the mass of the test tube removed is measured. This feeding of the 0.2% n-butane gas was repeated until constant mass was achieved, that is, until the amount of adsorption was saturated.

The test tube was reinstalled into the flow apparatus and air was fed into the test tube at a test temperature of 25°C for 12 minutes at 20.0 L/min to cause desorption of n-butane. The test tube was removed from the flow apparatus and the mass of the test tube removed was measured.

Measurement of 0-ppm Maintaining Time

The change in concentration in adsorption and desorption upon the feeding of n-butane was measured, using a portable gas detector, Cosmotector (model number: XP-3160, manufacturer: New Cosmos Electric Co., Ltd.), every six seconds.

A time over which 0 ppm was maintained continuously from the beginning in second adsorption was determined as a 0-ppm maintaining time (minutes), the second adsorption being after first adsorption and first desorption. This 0 ppm was defined as change in concentration in the second adsorption, the change being less than the quantification lower limit (25 ppm).

These adsorption and desorption processes were repeated so as to be performed twice in total, and the first adsorption amount, the effective adsorption-desorption amount, the effective adsorption-desorption amount ratio, and the effective adsorption-desorption ratio were calculated using Equations 5, 6, and 7 below.

Equation 5

First adsorption amount = first amount of n-butane adsorbed

The unit of the numerical value is as follows.
First amount of n-butane adsorbed (unit: g)

Equation 6

Effective adsorption-desorption amount = (second amount of n-butane adsorbed + second amount of n-butane desorbed) ÷ 2

The units of the numerical values are as follows.

Effective adsorption-desorption amount (unit: g)
Second amount of n-butane adsorbed (unit: g)
Second amount of n-butane desorbed (unit: g)

Equation 7

Effective adsorption-desorption amount ratio =

effective adsorption-desorption amount ÷ dry weight of

formed adsorber × 100

The units of the numerical values are as follows.

Effective adsorption-desorption amount ratio (unit: % by weight)
Effective adsorption-desorption amount (unit: g)
Dry weight of formed adsorber (unit: g)

Equation 8

Effective adsorption-desorption ratio = effective

adsorption-desorption amount ÷ first adsorption amount ×

100

The units of the numerical values are as follows.

Effective adsorption-desorption ratio (unit: %)
Effective adsorption-desorption amount (unit: g)
First adsorption amount (unit: g)

Example 1

1.1 Activated Carbon Fiber

Webbed rayon fiber (56 dtex, a fiber length of 102 mm) having a basis weight of 400 g/m$^2$ obtained through a carding machine was impregnated with 6 to 10% diammonium hydrogen phosphate aqueous solution, wrung out, and dried thereafter, to have 8 to 10% by weight of diammonium hydrogen phosphate attached to the fiber. The obtained pretreated fiber was heated in a nitrogen atmosphere to 900°C in 45 minutes and was kept at this temperature for three minutes. Continuously at that temperature, activation treatment was performed for 17 minutes in a nitrogen gas stream containing water vapor with a dew point of 71°C, thus obtaining activated carbon fiber.

1.2 Formed Adsorber

Into a mixer, 5 parts by weight of a binder that was acrylic fiber 50TWF manufactured by Japan Exlan Co., Ltd., and 0.5 L of water were put, this mixture was subjected to defibrillation and dispersion for 30 seconds, subsequently, 100 parts by weight of the activated carbon fiber obtained as described in Section 1.1 above and 0.5 L of water were added to the mixture, the added mixture was subjected to further defibrillation and dispersion for ten seconds, and slurry (first slurry) having therein the activated carbon fiber that has been defibrillated and dispersed was obtained. A metallic cylinder that is able to be divided at a position 18 mm from the bottom of the metallic cylinder and has an inner diameter of 63 mm and a height of 400 mm was placed on a funnel including a porous plate for suction dewatering, the first slurry was poured into the metallic cylinder, and thereafter, suction dewatering was performed from the bottom for shaping. A bottom portion of the metallic cylinder was separated, the bottom portion being up to 18 mm from the bottom and containing the moist shaped product, the separated metallic cylinder was sandwiched between punching plates at upper and lower cross-sectional surfaces of the separated metallic cylinder , a one-kilogram weight was placed thereon, the shaped product was dried at 120°C for four hours in a state of having been squashed to a height of 18 mm, the metallic cylinder was removed from the shaped product, and an adsorber that has been shaped into a disk shape having an outer diameter of 62 mm and a height of 18 mm was obtained. The obtained formed adsorber was more difficult to be deformed than the activated carbon fiber.

Example 2

1.1 Activated Carbon Fiber

A needle-punched nonwoven fabric made of rayon fiber (17 dtex, a fiber length of 76 mm) and having a basis weight of 400 g/m² was impregnated with 6 to 10% diammonium hydrogen phosphate aqueous solution, wrung out, and dried, to have 8 to 10% by weight of diammonium hydrogen phosphate attached to the nonwoven fabric. The obtained pretreated nonwoven fabric was heated in a nitrogen atmosphere to 900°C in 40 minutes and was kept at this temperature for three minutes. Continuously at that temperature, activation treatment was performed for 17 minutes in a nitrogen gas stream containing water vapor with a dew point of 71°C, thus obtaining an activated carbon fiber sheet.

1.2 Formed Adsorber

A formed adsorber was obtained in the same way as Example 1, except that the activated carbon fiber obtained as described in Section 1.1 above was used.

Example 3

1.1 Activated Carbon Fiber

A needle-punched nonwoven fabric made of rayon fiber (7.8 dtex, a fiber length of 76 mm) and having a basis weight of 400 g/m² was impregnated with 6 to 10% diammonium hydrogen phosphate aqueous solution, wrung out, and dried, to have 8 to 10% by weight of diammonium hydrogen phosphate attached to the nonwoven fabric. The obtained pretreated nonwoven fabric was heated in a nitrogen atmosphere to 900°C in 45 minutes and was kept at this temperature for three minutes. Continuously at that temperature, activation treatment was performed for 17 minutes in a nitrogen gas stream containing water vapor with a dew point of 71°C, thus obtaining an activated carbon fiber sheet.

1.2 Formed Adsorber

A formed adsorber was obtained in the same way as Example 1, except that the activated carbon fiber sheet obtained as described in Section 1.1 above was used.

Example 4

1.1 Activated Carbon Fiber

An activated carbon fiber sheet was obtained in the same way as Example 3, except that a needle-punched nonwoven fabric made of rayon fiber (5.6 dtex, a fiber length of 76 mm) and having a basis weight of 400 g/m² was used.

1.2 Formed Adsorber

A formed adsorber was obtained in the same way as Example 1, except that the activated carbon fiber sheet obtained as described in Section 1.1 above was used.

Example 5

1.1 Activated Carbon Fiber

Activated carbon fiber was obtained similarly to Example 1 above.

1.2 Formed Adsorber

Into a mixer, 5 parts by weight of the binder used in Example 1 and 0.5 L of water were put, this mixture was subjected to defibrillation and dispersion for 30 seconds, 60 parts by weight of the activated carbon fiber obtained as described in Section 1.1 above and 0.5 L of water were added to the mixture, the added mixture was subjected to further defibrillation and dispersion for ten seconds, and first slurry was obtained.
Subsequently, 40 parts by weight of granular activated carbon (a specific surface area of 1660 m²/g, a mean particle size of 502 μm, a standard deviation of 89 μm) was added to the first slurry, this mixture was stirred with a spatula, and second slurry having the activated carbon fiber and granular activated carbon dispersed therein was obtained. The second slurry was subjected to suction dewatering by the same method as Example 1, dried, and a formed adsorber having an outer diameter of 62 mm, a height of 18 mm, and a disk shape was obtained. The obtained formed adsorber was more difficult to be deformed than the activated carbon fiber.

Example 6

1.1 Activated Carbon Fiber

Activated carbon fiber was obtained similarly to Example 2 above.

1.2 Formed Adsorber

A formed adsorber was obtained in the same way as Example 5, except that the activated carbon fiber obtained as described in Section 1.1 above was used.

Example 7

1.1 Activated Carbon Fiber

An activated carbon fiber sheet was obtained similarly to Example 3 above.

1.2 Formed Adsorber

A formed adsorber was obtained in the same way as Example 5, except that the activated carbon fiber obtained as described in Section 1.1 above was used.

Example 8

1.1 Activated Carbon Fiber

An activated carbon fiber sheet was obtained similarly to Example 4 above.

1.2 Formed Adsorber

A formed adsorber was obtained in the same way as Example 5, except that the activated carbon fiber sheet obtained as described in Section 1.1 above was used.

Comparative Example 1

1.1 Activated Carbon Fiber

A needle-punched nonwoven fabric made of rayon fiber (3.3 dtex, a fiber length of 76 mm) and having a basis weight of 300 g/m$^2$ was impregnated with 6 to 10% diammonium hydrogen phosphate aqueous solution, wrung out, and dried, to have 8 to 10% by weight of diammonium hydrogen phosphate attached to the nonwoven fabric. The obtained pretreated nonwoven fabric was heated in a nitrogen atmosphere to 900°C in 50 minutes, and continuously at that temperature, activation treatment was performed for 13 minutes in a nitrogen gas stream containing water vapor with a dew point of 60°C, and an activated carbon fiber sheet was obtained.

1.2 Formed Adsorber

A formed adsorber was obtained in the same way as Example 1, except that the activated carbon fiber sheet obtained as described in Section 1.1 above for Comparative Example 1 was used.

Comparative Example 2

Into a mixer, 5 parts by weight of the binder used in Example 1 above and 0.5 L of water were put, this mixture was subjected to defibrillation and dispersion for 30 seconds, subsequently, 100 parts by weight of the granular activated carbon used in Example 5 and 0.5 L of water were added to the mixture, the added mixture was stirred with a spatula, and granular activated carbon slurry for adsorption was obtained. This slurry for adsorption was subjected to suction dewatering by the same method as Example 1, dried, and a formed adsorber having an outer diameter of 62 mm, a height of 18 mm, and a disk shape was obtained.

Measurement of Pressure Loss

The formed adsorbers of Examples 1 to 8 and Comparative Examples 1 and 2 were prepared.

A frame body (a frame container) that is a cylindrical container and has one surface and a surface opposite to that one surface that are open to allow ventilation therethrough was prepared as a container to store a formed adsorber. The one surface of the frame container prepared had a diameter of 6.2 cm.

The frame container was fully filled with a formed adsorber prepared to form a test sample for measurement of pressure loss.

The pressure loss was measured as follows. Air was fed to the test samples prepared as described above at 60 L/min and results of measurement of differential pressures between entrances and exits of the test samples were determined as pressure losses (kPa), the measurement using a differential pressure meter, testo 510 (Testo K.K.).

Various measurement results for the formed adsorbers are listed in Table 1-1 to Table 1-7.

Table 1-1

Table 1-1

| Type | | | | Example 1 | Example 2 |
|---|---|---|---|---|---|
| | | | | Adsorber | Adsorber |
| Adsorbing material | Activated carbon fiber or granular activated carbon | Type of adsorbing material | - | 100 parts by weight of activated carbon fiber | 100 parts by weight of activated carbon fiber |
| | | Fineness of precursor | dtex | **56** | **17** |
| | | Specific surface area | $m^2/g$ | **1972** | **1850** |
| | | Total pore volume | $cm^3/g$ | **0.94** | **0.82** |
| | | Mean pore diameter | nm | **1.91** | **1.78** |
| | | a) Ultramicropore volume[1] | $cm^3/g$ | **0.13** | **0.22** |
| | | b) Micropore volume[2] | $cm^3/g$ | **0.68** | **0.70** |
| | | b) - a) | $cm^3/g$ | **0.56** | **0.47** |
| | | a) / b) | % | **18.4** | **32.1** |
| | | Fiber size | $\mu m$ | **34.8** | **28.3** |
| | | Mean value of fiber length | $\mu m$ | **1132** | **1008** |
| | | Standard deviation of fiber length | $\mu m$ | **734** | **671** |
| | | Coefficient of variation of fiber length | - | **0.65** | **0.67** |
| | | Mean value of particle size | $\mu m$ | **-** | **-** |
| | | Standard deviation of particle size | $\mu m$ | **-** | **-** |
| | | Moisture (at 23°C and RH of 50%) | % | **12.1** | **9.2** |

(continued)

|  |  |  |  |  | Example 1 | Example 2 |
|---|---|---|---|---|---|---|
| Formed adsorber | Type | | | | Adsorber | Adsorber |
|  | Weight[3] | | | 9 | **5.35** | **5.26** |
|  | Mixing ratio | Activated carbon fiber | Parts per weight[3] | - | **100** | **100** |
|  |  | Fibrous binder | Parts per weight[3] | - | **5** | **5** |
|  | Dimension | | Cross-sectional diameter | cm | **Φ6.2** | **Φ6.2** |
|  |  | | Length | cm | **1.8** | **1.8** |
|  | Volume | | | cm$^3$ | **54.3** | **54.3** |
|  | Density[3] | | | g/cm$^3$ | **0.099** | **0.097** |
|  | 0.2% n-butane adsorption-desorption performance | | First adsorption amount | 9 | **0.54** | **0.53** |
|  |  | | Effective adsorption-desorption amount[4] | 9 | **0.43** | **0.43** |
|  |  | | Effective adsorption-desorption amount ratio[5] | wt% | **8.0** | **8.2** |
|  |  | | Effective adsorption-desorption ratio[6] | % | **80%** | **81%** |
|  |  | | 0-ppm Maintaining time[7] | min | **70** | **70** |
|  | Pressure loss | | | kPa | **0.22** | **0.47** |
| 1) Pore size of 0.7 nm or smaller 2) Pore size of 2.0 nm or smaller<br>3) Dry basis 4) Mean of second adsorption amount and second desorption amount<br>5) (Effective adsorption-desorption amount / weight of formed adsorber) $\times$ 100 (%)<br>6) (Effective adsorption-desorption amount / first adsorption amount) $\times$ 100 (%)<br>7) 0-ppm maintaining time in second adsorption | | | | | | |

Table 1-2

Table 1-2

| | | | | Example 3 | Example 4 |
|---|---|---|---|---|---|
| Type | | | | Adsorber | Adsorber |
| Adsorbing material | Activated carbon fiber or granular activated carbon | Type of adsorbing material | - | 100 parts by weight of activated carbon fiber | 100 parts by weight of activated carbon fiber |
| | | Fineness of precursor | dtex | **7.8** | **5.6** |
| | | Specific surface area | m2/g | **1991** | **2048** |
| | | Total pore volume | cm$^3$/g | **0.93** | **0.95** |
| | | Mean pore diameter | nm | **1.86** | **1.85** |
| | | a) Ultramicropore volume[1] | cm$^3$/g | **0.12** | **0.15** |
| | | b) Micropore volume[2] | cm$^3$/g | **0.71** | **0.73** |
| | | b)-a) | cm$^3$/g | **0.59** | **0.57** |
| | | a) / b) | % | **17.3** | **21.1** |
| | | Fiber size | μm | **19.4** | **15.7** |
| | | Mean value of fiber length | μm | **943** | **857** |
| | | Standard deviation of fiber length | μm | **460** | **392** |
| | | Coefficient of variation of fiber length | - | **0.49** | **0.46** |
| | | Mean value of particle size | μm | **-** | **-** |
| | | Standard deviation of particle size | μm | **-** | **-** |
| | | Moisture (at 23°C and RH of 50%) | % | **4.8** | **3.8** |

(continued)

| | | | | Example 3 | Example 4 |
|---|---|---|---|---|---|
| | Type | | | Adsorber | Adsorber |
| Formed adsorber | Weight[3] | | 9 | **5.31** | **5.28** |
| | Mixing ratio | Activated carbon fiber | Parts per weight[3] | - | **100** | **100** |
| | | Fibrous binder | Parts per weight[3] | - | **5** | **5** |
| | Dimension | | Cross-sectional diameter | cm | **Φ6.2** | **Φ6.2** |
| | | | Length | cm | **1.8** | **1.8** |
| | Volume | | cm3 | **54.3** | **54.3** |
| | Density[3] | | g/cm3 | **0.098** | **0.097** |
| | 0.2% n-butane adsorption-desorption performance | First adsorption amount | 9 | **0.54** | **0.52** |
| | | Effective adsorption-desorption amount[4] | 9 | **0.44** | **0.43** |
| | | Effective adsorption-desorption amount ratio[5] | wt% | **8.3** | **8.1** |
| | | Effective adsorption-desorption ratio[6] | % | **82%** | **83%** |
| | | 0-ppm Maintaining time[7] | min | **69** | **75** |
| | Pressure loss | | kPa | **1.19** | **1.37** |
| 1) Pore size of 0.7 nm or smaller 2) Pore size of 2.0 nm or smaller<br>3) Dry basis 4) Mean of second adsorption amount and second desorption amount<br>5) (Effective adsorption-desorption amount / weight of formed adsorber) × 100 (%)<br>6) (Effective adsorption-desorption amount / first adsorption amount) × 100 (%)<br>7) 0-ppm maintaining time in second adsorption | | | | | |

Table 1-3

Table 1-3

| | | | | Example 5 | |
|---|---|---|---|---|---|
| | Type | | | Adsorber | |
| | | Type of adsorbing material | - | 60 parts by weight of activated carbon fiber | 40 parts by weight of granular activated carbon |
| Adsorbing material | Activated carbon fiber or granular activated carbon | Fineness of precursor | dtex | Same carbon fiber as Example 1 | - |
| | | Specific surface area | m$^2$/g | | 1660 |
| | | Total pore volume | cm$^3$/g | | 0.766 |
| | | Mean pore diameter | nm | | 1.85 |
| | | a) Ultramicropore volume[1] | cm3/g | | 0.13 |
| | | b) Micropore volume[2] | cm$^3$/g | | 0.60 |
| | | b) - a) | cm$^3$/g | | 0.47 |
| | | a) / b) | % | | 22.3 |
| | | Fiber size | μm | | - |
| | | Mean value of fiber length | μm | | - |
| | | Standard deviation of fiber length | μm | | - |
| | | Coefficient of variation of fiber length | - | | - |
| | | Mean value of particle size | μm | | 502 |
| | | Standard deviation of particle size | μm | | 89 |
| | | Moisture (at 23°C and RH of 50%) | % | | 10.3 |

(continued)

| | | | | | Example 5 |
|---|---|---|---|---|---|
| | Type | | | | Adsorber |
| Formed adsorber | Weight[3] | | | g | **5.75** |
| | Mixing ratio | Activated carbon fiber | Parts per weight[3] | - | **60** |
| | | Fibrous binder | Parts per weight[3] | - | **5** |
| | Dimension | | Cross-sectional diameter | cm | **Φ6.2** |
| | | | Length | cm | **1.8** |
| | Volume | | | cm$^3$ | **54.3** |
| | Density[3] | | | g/cm$^3$ | **0.106** |
| | 0.2% n-butane adsorption-desorption performance | | First adsorption amount | 9 | **0.62** |
| | | | Effective adsorption-desorption amount[4] | 9 | **0.43** |
| | | | Effective adsorption-desorption amount ratio[5] | wt% | **7.5** |
| | | | Effective adsorption-desorption ratio[6] | % | **70%** |
| | | | 0-ppm Maintaining time[7] | min | **71** |
| | Pressure loss | | | kPa | **0.16** |
| 1) Pore size of 0.7 nm or smaller 2) Pore size of 2.0 nm or smaller<br>3) Dry basis 4) Mean of second adsorption amount and second desorption amount<br>5) (Effective adsorption-desorption amount / weight of formed adsorber) $\times$ 100 (%)<br>6) (Effective adsorption-desorption amount / first adsorption amount) $\times$ 100 (%)<br>7) 0-ppm maintaining time in second adsorption | | | | | |

Table 1-4

Table 1-4

| | | | | Example 6 | |
|---|---|---|---|---|---|
| | Type | | | Adsorber | |
| Adsorbing material | Activated carbon fiber or granular activated carbon | Type of adsorbing material | - | 60 parts by weight of activated carbon fiber | 40 parts by weight of granular activated carbon |
| | | Fineness of precursor | dtex | Same carbon fiber as Example 2 | Same granular activated carbon as Example 5 |
| | | Specific surface area | $m^2/g$ | | |
| | | Total pore volume | $cm^3/g$ | | |
| | | Mean pore diameter | nm | | |
| | | a) Ultramicropore volume[1] | $cm^3/g$ | | |
| | | b) Micropore volume[2] | $cm^3/g$ | | |
| | | b) - a) | $cm^3/g$ | | |
| | | a) / b) | % | | |
| | | Fiber size | $\mu m$ | | |
| | | Mean value of fiber length | $\mu m$ | | |
| | | Standard deviation of fiber length | $\mu m$ | | |
| | | Coefficient of variation of fiber length | - | | |
| | | Mean value of particle size | $\mu m$ | | |
| | | Standard deviation of particle size | $\mu m$ | | |
| | | Moisture (at 23°C and RH of 50%) | % | | |

(continued)

| | | | | Example 6 |
|---|---|---|---|---|
| | Type | | | Adsorber |
| adsorber | Weight[3] | | g | **5.80** |
| | ' Mixing ratio | Activated carbon fiber | Parts per weight[3] | - | **60** |
| | | Fibrous binder | Parts per weight[3] | - | **5** |
| | Dimension | Cross-sectional diameter | cm | $\Phi$**6.2** |
| | | Length | cm | **1.8** |
| | Volume | | $cm^3$ | **54.3** |
| | Density[3] | | $g/cm^3$ | **0.107** |
| | 0.2% n-butane adsorption-desorption performance | First adsorption amount | g | **0.63** |
| | | Effective adsorption-desorption amount[4] | g | **0.47** |
| | | Effective adsorption-desorption amount ratio[5] | wt% | **8.0** |
| | | Effective adsorption-desorption ratio[6] | % | **75%** |
| | | 0-ppm Maintaining time[7] | min | **68** |
| | Pressure loss | | kPa | **0.33** |

1) Pore size of 0.7 nm or smaller 2) Pore size of 2.0 nm or smaller
3) Dry basis 4) Mean of second adsorption amount and second desorption amount
5) (Effective adsorption-desorption amount / weight of formed adsorber) $\times$ 100 (%)
6) (Effective adsorption-desorption amount / first adsorption amount) $\times$ 100 (%)
7) 0-ppm maintaining time in second adsorption

Table 1-5

Table 1-5

|  |  |  |  | Example 7 | |
| --- | --- | --- | --- | --- | --- |
| Type | | | | Adsorber | |
| Adsorbing material | Activated carbon fiber or granular activated carbon | Type of adsorbing material | - | 60 parts by weight of activated carbon fiber | 40 parts by weight of granular activated carbon |
|  |  | Fineness of precursor | dtex | Same carbon fiber as Example 3 | Same granular activated carbon as Example 5 |
|  |  | Specific surface area | $m^2/g$ |  |  |
|  |  | Total pore volume | $cm^3/g$ |  |  |
|  |  | Mean pore diameter | nm |  |  |
|  |  | a) Ultramicropore volume[1] | $cm^3/g$ |  |  |
|  |  | b) Micropore volume[2] | $cm^3/g$ |  |  |
|  |  | b) - a) | $cm^3/g$ |  |  |
|  |  | a) / b) | % |  |  |
|  |  | Fiber size | $\mu m$ |  |  |
|  |  | Mean value of fiber length | $\mu m$ |  |  |
|  |  | Standard deviation of fiber length | $\mu m$ |  |  |
|  |  | Coefficient of variation of fiber length | - |  |  |
|  |  | Mean value of particle size | $\mu m$ |  |  |
|  |  | Standard deviation of particle size | $\mu m$ |  |  |
|  |  | Moisture (at 23°C and RH of 50%) | % |  |  |

(continued)

| | | | | Example 7 |
|---|---|---|---|---|
| | Type | | | Adsorber |
| Formed adsorber | Weight[3] | | 9 | **5.93** |
| | Mixing ratio | Activated carbon fiber | Parts per weight[3] | - | **60** |
| | | Fibrous binder | Parts per weight[3] | - | **5** |
| | Dimension | Cross-sectional diameter | cm | **Φ6.2** |
| | | Length | cm | **1.8** |
| | Volume | | cm3 | **54.3** |
| | Density[3] | | g/cm³ | **0.109** |
| | 0.2% n-butane adsorption-desorption performance | First adsorption amount | 9 | **0.61** |
| | | Effective adsorption-desorption amount[4] | 9 | **0.47** |
| | | Effective adsorption-desorption amount ratio[5] | wt% | **7.9** |
| | | Effective adsorption-desorption ratio[6] | % | **77%** |
| | | 0-ppm Maintaining time[7] | min | **69** |
| | Pressure loss | | kPa | **0.85** |

1) Pore size of 0.7 nm or smaller 2) Pore size of 2.0 nm or smaller
3) Dry basis 4) Mean of second adsorption amount and second desorption amount
5) (Effective adsorption-desorption amount / weight of formed adsorber) × 100 (%)
6) (Effective adsorption-desorption amount / first adsorption amount) × 100 (%)
7) 0-ppm maintaining time in second adsorption

Table 1-6

Table 1-6

| | | | | Example 8 | |
|---|---|---|---|---|---|
| Type | | | | Adsorber | |
| Adsorbing material | Activated carbon fiber or granular activated carbon | Type of adsorbing material | - | 60 parts by weight of activated carbon fiber | 40 parts by weight of granular activated carbon |
| | | Fineness of precursor | dtex | Same carbon fiber as Example 4 | Same granular activated carbon as Example 5 |
| | | Specific surface area | $m^2/g$ | | |
| | | Total pore volume | cm3/g | | |
| | | Mean pore diameter | nm | | |
| | | a) Ultramicropore volume[1] | cm3/g | | |
| | | b) Micropore volume[2] | cm3/g | | |
| | | b) - a) | cm3/g | | |
| | | a) / b) | % | | |
| | | Fiber size | $\mu$m | | |
| | | Mean value of fiber length | $\mu$m | | |
| | | Standard deviation of fiber length | $\mu$m | | |
| | | Coefficient of variation of fiber length | - | | |
| | | Mean value of particle size | $\mu$m | | |
| | | Standard deviation of particle size | $\mu$m | | |
| | | Moisture (at 23°C and RH of 50%) | % | | |

(continued)

| | | | | | Example 8 |
|---|---|---|---|---|---|
| | Type | | | | Adsorber |
| Formed adsorber | Weight[3] | | | 9 | **5.76** |
| | Mixing ratio | Activated carbon fiber | Parts per weight[3] | - | **60** |
| | | Fibrous binder | Parts per weight[3] | - | **5** |
| | Dimension | | Cross-sectional diameter | cm | **Φ6.2** |
| | | | Length | cm | **1.8** |
| | Volume | | | cm3 | **54.3** |
| | Density[3] | | | g/cm3 | **0.106** |
| | 0.2% n-butane adsorption-desorption performance | | First adsorption amount | 9 | **0.61** |
| | | | Effective adsorption-desorption amount[4] | 9 | **0.48** |
| | | | Effective adsorption-desorption amount ratio[5] | wt% | **8.3** |
| | | | Effective adsorption-desorption ratio[6] | % | **78%** |
| | | | 0-ppm Maintaining time[7] | min | **75** |
| | Pressure loss | | | kPa | **0.98** |

1) Pore size of 0.7 nm or smaller 2) Pore size of 2.0 nm or smaller
3) Dry basis 4) Mean of second adsorption amount and second desorption amount
5) (Effective adsorption-desorption amount / weight of formed adsorber) × 100 (%)
6) (Effective adsorption-desorption amount / first adsorption amount) × 100 (%)
7) 0-ppm maintaining time in second adsorption

Table 1-7

Table 1-7

| | | | | Comparative Example 1 | Comparative Example 2 |
|---|---|---|---|---|---|
| Type | | | | Adsorber | Adsorber |
| Adsorbing material | Activated carbon fiber or granular activated carbon | Type of adsorbing material | - | 100 parts by weight of activated carbon fiber | 100 parts by weight of granular activated carbon |
| | | Fineness of precursor | dtex | 3.3 | Same granular activated carbon as Example 5 |
| | | Specific surface area | m²/g | 1680 | |
| | | Total pore volume | cm3/g | 0.73 | |
| | | Mean pore diameter | nm | 1.74 | |
| | | a) Ultramicropore volume[1] | cm³/g | 0.25 | |
| | | b) Micropore volume[2] | cm³/g | 0.65 | |
| | | b) - a) | cm³/g | 0.40 | |
| | | a) / b) | % | 38.3 | |
| | | Fiber size | μm | 12.5 | |
| | | Mean value of fiber length | μm | 798 | |
| | | Standard deviation of fiber length | μm | 289 | |
| | | Coefficient of variation of fiber length | - | 0.36 | |
| | | Mean value of particle size | μm | - | |
| | | Standard deviation of particle size | μm | - | |
| | | Moisture (at 23°C and RH of 50%) | % | 11.5 | |

(continued)

|  | | | | | Comparative Example 1 | Comparative Example 2 |
|---|---|---|---|---|---|---|
|  | | Type | | | Adsorber | Adsorber |
| Formed adsorber | | Weight[3] | | 9 | **5.32** | **20.05** |
|  | Mixing ratio | Activated carbon fiber | Parts per weight[3] | - | **100** | **100** |
|  |  | Fibrous binder | Parts per weight[3] | - | **5** | **5** |
|  | Dimension | | Cross-sectional diameter | cm | **Φ6.2** | **Φ6.2** |
|  |  | | Length | cm | **1.8** | **1.8** |
|  | Volume | | | cm3 | **54.3** | **54.3** |
|  | Density[3] | | | g/cm$^3$ | **0.097** | **0.369** |
|  | 0.2% n-butane adsorption-desorption performance | | First adsorption amount | 9 | **0.53** | **2.00** |
|  |  | | Effective adsorption-desorption amount[4] | 9 | **0.41** | **0.64** |
|  |  | | Effective adsorption-desorption amount ratio[5] | wt% | **7.7** | **3.2** |
|  |  | | Effective adsorption-desorption ratio[6] | % | **77%** | **32%** |
|  |  | | 0-ppm Maintaining time[7] | min | **67** | **50** |
|  | Pressure loss | | | kPa | **1.71** | **1.78** |

1) Pore size of 0.7 nm or smaller 2) Pore size of 2.0 nm or smaller
3) Dry basis 4) Mean of second adsorption amount and second desorption amount
5) (Effective adsorption-desorption amount / weight of formed adsorber) × 100 (%)
6) (Effective adsorption-desorption amount / first adsorption amount) × 100 (%)
7) 0-ppm maintaining time in second adsorption

## List of Reference Signs

1 LAYERED ADSORBER
10 SHEET-FORMED ADSORBER
10a MAJOR SURFACE OF SHEET-FORMED ADSORBER
10b LATERAL END SURFACE OF SHEET-FORMED ADSORBER
10c LATERAL END SURFACE OF SHEET-FORMED ADSORBER
F FLOW DIRECTION OF GAS
2 ADSORBER FORMED IN DISK SHAPE
3 ADSORBER FORMED IN CYLINDER SHAPE

**Claims**

1. A formed adsorber for canisters, the formed adsorber comprising: an adsorbing material including activated carbon fiber; and a binder,

   a ratio of a content of the binder to a content of the adsorbing material including the activated carbon fiber being 0.3 to 20 parts by weight of the binder to 100 parts by weight of the adsorbing material including the activated carbon fiber,
   the activated carbon fiber having a fiber size of 13.0 $\mu$m or larger.

2. The formed adsorber according to claim 1, wherein fineness of a fiber material serving as a precursor of the activated carbon fiber ranges from 4.0 to 60.0 dtex.

3. The formed adsorber according to claim 1 or 2, wherein the activated carbon fiber has a specific surface area ranging from 1110 to 2300 m$^2$/g.

4. The formed adsorber according to any one of claims 1 to 3, wherein the activated carbon fiber has a total pore volume ranging from 0.50 to 1.20 cm$^3$/g.

5. The formed adsorber according to any one of claims 1 to 4, wherein the activated carbon fiber has a pore volume ranging from 0.20 to 1.20 cm$^3$/g, the pore volume being a volume of pores having pore sizes larger than 0.7 nm and equal to or smaller than 2.0 nm.

6. The formed adsorber according to any one of claims 1 to 5, wherein the activated carbon fiber has a pore volume ratio $R_{0.7/2.0}$ of 15% or more and less than 50%, and the pore volume ratio $R_{0.7/2.0}$ is a ratio of a pore volume of pores having pore sizes of 0.7 nm or smaller to a pore volume of pores having pore sizes of 2.0 nm or smaller.

7. A canister comprising the formed adsorber according to any one of claims 1 to 6.

8. The canister according to claim 7, wherein the canister is a canister for a motor vehicle.

Fig. 1

Fig. 2

5

Fig. 3

## INTERNATIONAL SEARCH REPORT

| International application No. |
| --- |
| **PCT/JP2022/007085** |

**A. CLASSIFICATION OF SUBJECT MATTER**

*F02M 25/08*(2006.01)i; *B01D 53/04*(2006.01)i; *B01J 20/20*(2006.01)i; *B01J 20/28*(2006.01)i; *C01B 32/30*(2017.01)i
FI: F02M25/08 311D; B01J20/28 Z; B01D53/04 111; C01B32/30; B01J20/20 B

According to International Patent Classification (IPC) or to both national classification and IPC

**B. FIELDS SEARCHED**

Minimum documentation searched (classification system followed by classification symbols)

F02M25/08; B01D53/04; B01J20/20; B01J20/28; C01B32/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 5-103979 A (OSAKA GAS CO LTD) 27 April 1993 (1993-04-27) paragraphs [0010]-[0015], [0020], [0027] | 1-2 |
| Y | | 3-8 |
| Y | JP 2019-218943 A (NIPPON PAPER INDUSTRIES CO., LTD.) 26 December 2019 (2019-12-26) claims 1-2, paragraphs [0002], [0007]-[0014], [0020] | 3-8 |
| A | JP 2013-173137 A (KURARAY CHEMICAL CO LTD) 05 September 2013 (2013-09-05) | 1-8 |
| A | JP 6568328 B1 (NIPPON PAPER INDUSTRIES CO., LTD.) 28 August 2019 (2019-08-28) | 1-8 |
| A | JP 10-5580 A (KURARAY CHEMICAL CO LTD) 13 January 1998 (1998-01-13) | 1-8 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 April 2022** | **10 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/007085**

| Patent document cited in search report | | | Publication date (day/month/year) | Patent family member(s) | | Publication date (day/month/year) |
|---|---|---|---|---|---|---|
| JP | 5-103979 | A | 27 April 1993 | (Family: none) | | |
| JP | 2019-218943 | A | 26 December 2019 | US 2021/0198111 A1<br>claims 1-2, paragraphs [0003],<br>[0008]-[0035], [0053]-[0055]<br>WO 2019/244630 A1<br>EP 3812571 A1<br>CN 112154264 A<br>KR 10-2021-0020138 A | | |
| JP | 2013-173137 | A | 05 September 2013 | US 2010/0212496 A1<br>WO 2009/031467 A1 | | |
| JP | 6568328 | B1 | 28 August 2019 | US 2021/0198111 A1<br>WO 2019/244630 A1<br>EP 3812571 A1<br>CN 112154264 A<br>KR 10-2021-0020138 A | | |
| JP | 10-5580 | A | 13 January 1998 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013173137 A
- JP 6568328 B
- JP H10005580 A